# EUROPÄISCHE PATENTSCHRIFT

(11) **EP 2 935 815 B1**
(45) Veröffentlichungstag und Bekanntmachung des Hinweises auf die Patenterteilung: **01.03.2017**
(21) Anmeldenummer: 13805840.9
(22) Anmeldetag: 10.12.2013
(51) Int. Cl.: F01N 3/20

(54) **REDUKTIONSMITTELTANK**
REDUCING AGENT TANK
RÉSERVOIR DE RÉDUCTEUR

(30) Priorität: 20.12.2012 DE 102012224095
(43) Veröffentlichungstag der Anmeldung: 28.10.2015
(73) Patentinhaber: Continental Automotive GmbH, 30165 Hannover (DE)
(72) Erfinder: GRASS, Philippe, 93053 Regensburg (DE)
(86) Internationale Anmeldenummer: PCT/EP2013/076111
(87) Internationale Veröffentlichungsnummer: WO 2014/095496

(56) Entgegenhaltungen:
- EP-A2- 2 458 171
- WO-A1-2011/101016
- DE-A1-102010 042 386
- DE-U1-202009 006 151
- DE-U1-202009 009 647

## Beschreibung

Die Erfindung betrifft einen Reduktionsmitteltank zur Aufnahme und Bevorratung einer Reduktionsmittellösung mit einem Einfüllstutzen und einem Füllstandssensor zur Bestimmung des Füllstandes der Reduktionsmittellösung in dem Reduktionsmitteltank.

Zur Reduzierung eines Stickoxidanteils im Abgas einer Brennkraftmaschine kann eine Abgasnachbehandlung mit einer wässrigen Reduktionsmittellösung durchgeführt werden. Die wässrige Reduktionsmittellösung kann auch als Reduktionsmittel bezeichnet werden. Bevorzugt ist das Reduktionsmittel Harnstoff. Zur Abgasnachbehandlung wird die wässrige Reduktionsmittellösung mit einer Flüssigkeitspumpe zu einem Reduktionsmitteleinspritzventil gepumpt, das die Reduktionsmittellösung stromaufwärts des SCR-Katalysators in einen Abgasstrom in einem Abgastrakt der Brennkraftmaschine zumisst. Für eine Bevorratung des Reduktionsmittels wird ein speziell ausgebildeter Reduktionsmitteltank, wie zum Beispiel aus der DE202009006151U1 bekannt, genutzt. Es kann vorkommen, dass anstelle der wässrigen Reduktionsmittellösung eine andere Flüssigkeit, wie zum Beispiel Kraftstoff oder Öl, in den Reduktionsmitteltank eingefüllt wird. Eine solche Fehlbetankung des Reduktionsmitteltanks würde zu schweren Schäden am Abgasnachbehandlungssystem führen und muss sicher erkannt werden, um entsprechende Schutzmaßnahmen einleiten zu können. Eine Schutzmaßnahme nach einer Fehlbetankung des Reduktionsmitteltanks könnte eine Stilllegung des Abgasnachbehandlungssystems, ein entsprechender Eintrag in den Fehlerspeicher der Motorsteuerung und/oder ein Warnhinweis an den Fahrzeugführer sein.

Die Aufgabe, die der Erfindung zugrunde liegt, ist es, einen Reduktionsmitteltank zur Aufnahme und Bevorratung einer Reduktionsmittellösung zu schaffen, der eine Bevorratung des flüssigen schadstoffmindernden Mediums ermöglicht und zugleich einen zuverlässige Erkennung einer Fehlbetankung ermöglicht.

Die Aufgabe wird durch die Merkmale des unabhängigen Patentanspruchs gelöst. Vorteilhafte Weiterbildungen der Erfindung sind in den Unteransprüchen gekennzeichnet.

Die Erfindung zeichnet sich dadurch aus, dass in dem Einfüllstutzen eine erste Elektrode und eine zweite Elektrode derart angeordnet sind, dass die erste Elektrode und die zweite Elektrode von einer in den Reduktionsmitteltank einströmenden Flüssigkeit überströmt werden, wobei die erste Elektrode und die zweite Elektrode in einen direkten Kontakt mit der einströmenden Flüssigkeit geraten. Dies hat den Vorteil, dass durch den Füllstandssensor der Vorgang der Betankung des Reduktionsmitteltanks sicher erkannt wird, wobei durch den direkten Kontakt der Flüssigkeit der ersten Elektrode und der zweiten Elektrode eine Fehlbetankung des Reduktionsmitteltanks erkennbar ist. Reduktionsmittellösungen sind gute leitende Medien für elektrischen Strom, wohingegen Kraftstoff und Öl kaum den elektrischen Strom leiten. Wenn nun der Füllstandssensor den Vorgang der Betankung des Reduktionsmitteltanks erkennt, aber zwischen der ersten Elektrode und der zweiten Elektrode kein elektrischer Strom fließen kann, liegt damit ein deutlicher Hinweis auf eine Fehlbetankung des Reduktionsmitteltanks vor. Die zuvor beschriebenen Schutzmaßnahmen können dann umgehend eingeleitet werden.

Eine Herstellung des erfindungsgemäßen Reduktionsmitteltanks kann beispielsweise mittels eines Spritzgussverfahrens erfolgen, bei dem zum Beispiel die erste Elektrode und die zweite Elektrode als vorgefertigtes Modul in der Tankwand im Bereich des Einfüllstutzens angeordnet werden. Der Reduktionsmitteltank kann beispielsweise im Wesentlichen Kunststoff bestehen.

In einer vorteilhaften Ausgestaltung ist die erste Elektrode als ein erstes metallisches Netz ausgebildet. Durch das metallische Netz kann die einströmende Flüssigkeit ungehindert hindurchtreten, wobei massive Verunreinigungen, wie zum Beispiel Sandkörner, ausgefiltert werden. Da ein solches Netz großflächig ausgebildet sein kann und im besten Fall den gesamten Querschnitt des Einfüllstutzens überspannt, ist sichergestellt, dass die in den Reduktionsmitteltank einströmende Flüssigkeit in einen direkten Kontakt mit der ersten Elektrode gerät. Wenn die zweite Elektrode als ein zweites metallisches Netz ausgebildet ist, trifft das soeben Gesagte auch für die zweite Elektrode zu.

In einer weiteren vorteilhaften Ausgestaltung ist der Füllstandssensor als Ultraschallfüllstandssensor ausgebildet. Ultraschallfüllstandssensoren eignen sich hervorragend zur sicheren und genauen Bestimmung des Füllstandes der Reduktionsmittellösung in dem Reduktionsmitteltank.

Ausführungsbeispiele der Erfindung sind im Folgenden anhand der Zeichnungen erläutert. Es zeigen:
- Figur 1: ein Abgasnachbehandlungssystem,
- Figur 2: einen Reduktionsmitteltank.

Elemente gleicher Konstruktion oder Funktion sind figurenübergreifend mit den gleichen Bezugszeichen versehen.

Eine Reduktionsmitteltank 1 zur Bevorratung eines flüssigen Mediums zur Schadstoffreduktion in Abgasen kann beispielsweise in einem Kraftfahrzeug angeordnet sein. Das flüssige Medium zur Schadstoffreduzierung kann vorzugsweise eine wässrige Reduktionsmittellösung 2 und/oder ein Reduktionsmittelvorläufer, beispielsweise eine wässrige Harnstofflösung, sein.

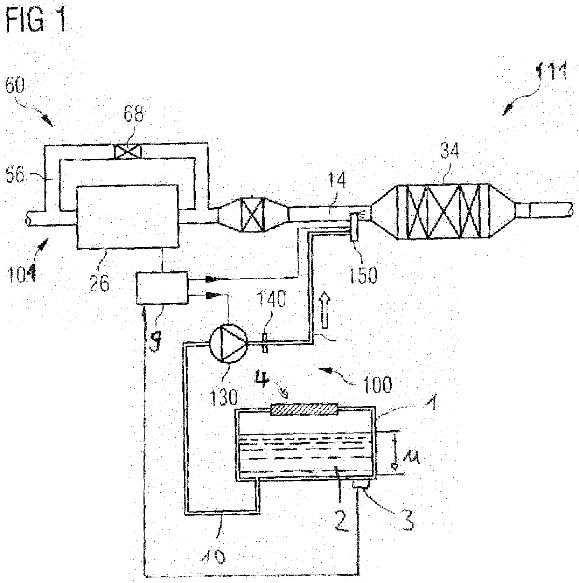

Figur 1 zeigt ein Abgasnachbehandlungssystem 111 mit einem Ansaugtrakt 101, einem Brennraum 26, einem Abgastrakt 14, einer Abgasrückführung 60 und einem Reduktionsmittelzuführsystem 100.

Ein elektronisches Steuergerät 9 überwacht die Funktionen des Abgasnachbehandlungssystems 111.

Die Abgasrückführung 60 weist eine Abgasrückführleitung 66 auf. Die Abgasrückführleitung 66 zweigt stromabwärts des Brennraums 26 von dem Abgastrakt 14 ab und mündet stromaufwärts des Brennraums 26 in den Ansaugtrakt 101. In der Abgasrückführleitung 66 ist ein Abgasrückführventil 68 angeordnet, mittels dem die zurückgeleitete Abgasmenge gesteuert werden kann. Mittels der Abgasrückführleitung 66 kann Abgas in den Brennraum 26 der Brennkraftmaschine zurückgeführt werden, um so den Sauerstoffgehalt in dem angesaugten, für den Brennraum 26 bestimmten Gasgemisch zu senken und so die Emission von Stickoxiden zu senken.

In dem Abgastrakt ist ein Katalysator 34 zur selektiven katalytischen Reduktion (SCR-Katalysator) angeordnet. Ein im Abgasstrang 14 angeordneter Oxidationskatalysator kann aus dem SCR-Katalysator 34 austretendes NO zu NO₂ oxidieren.

Dem Abgastrakt 14 ist vorzugsweise ein Reduktionsmittelzuführsystem 100 zugeordnet. Das Reduktionsmittelzuführsystem 100 umfasst einen Reduktionsmitteltank 1 zur Aufnahme der Reduktionsmittellösung 2. Das Reduktionsmittelzuführsystem 100 weist darüber hinaus verschiedene hydraulische Aggregate wie zum Beispiel eine Reduktionsmittelpumpe 130, ein Druckregelventil 140 und ein Reduktionsmitteleinspritzventil 150 auf. Mittels der Reduktionsmittelpumpe 130 kann das Reduktionsmittel aus dem Reduktionsmitteltank 1 über eine Reduktionsmittelleitung 10 zu dem Reduktionsmitteleinspritzventil 150 geleitet werden. Durch entsprechendes Ansteuern des Reduktionsmitteleinspritzventils 150 kann dann das Reduktionsmittel 2 dem Abgas im Abgastrakt 14 zugemessen werden, wobei die Einspritzrichtung sowohl in Richtung des Abgasstroms als auch in Richtung entgegen dem Abgasstrom erfolgen kann. Das Pumpen des Reduktionsmittels 2 aus dem Reduktionsmitteltank 1 hin zu dem Reduktionsmitteleinspritzventil 150 trägt zu einem vorteilhaften Zumessen des Reduktionsmittels 2 bei.

Eine Steuergerät 9 kann dazu ausgebildet sein, um in Abhängigkeit von in dem Brennraum und/oder in dem Reduktionsmittel erfassten Messgrößen eine Dosierung des Reduktionsmittels 2 zu steuern. Sollte die Betankung des Reduktionsmitteltanks mit einer falschen Flüssigkeit 12 festgestellt werden, kann das Steuergerät 9 die Zuführ der Reduktionsmittellösung 2 zum Reduktionsmitteleinspritzventil 150 zum Beispiel durch Abschalten der Reduktionsmittelpumpe 130 unterbinden.

Um eine möglichst genaue Dosierung des Reduktionsmittels 2 zu ermöglichen, können ein oder mehrere Parameter, zum Beispiel die Reduktionsmittelkonzentration oder der Füllstand 11 des Reduktionsmittels 2 im Reduktionsmitteltank 1 erfasst werden. Eine Veränderung der Reduktionsmittelkonzentration kann zum Beispiel aus einer Zersetzungsreaktion der Reduktionsmittellösung 2 und/oder einer Aufkonzentrierung durch Verdunstung des Wasseranteils in der Reduktionsmittellösung 2 resultieren. Zum Erfassen der jeweiligen Parameter können in dem und/oder an dem Reduktionsmitteltank 1 ein oder mehrere Sensoren angeordnet werden. Zur Erfassung des Füllstandes 11 des Reduktionsmittels 2 ist in dem oder an dem Reduktionsmitteltank 1 ein Füllstandssensor 3 angeordnet. Der Füllstandssensor 3 ist elektrisch mit dem Steuergerät 9 verbunden.

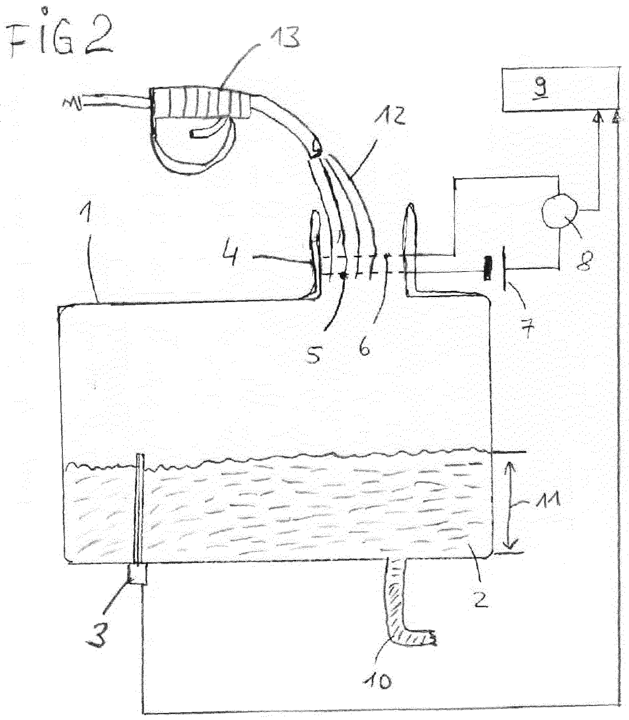

Figur 2 zeigt einen Reduktionsmitteltank 1, der zur Bevorratung einer Reduktionsmittellösung 2 ausgebildet ist. Die Reduktionsmittellösung 2 wird über den Einfüllstutzen 4 in den Reduktionsmitteltank 1 eingefüllt. Der Reduktionsmitteltank 1 weist einen Füllstandssensor 3 auf, mit dem der Füllstand 11 der Reduktionsmittellösung 2 in dem Reduktionsmitteltank 1 ermittelt werden kann. Der Füllstandssensor 3 ist elektrisch mit einem Steuergerät 9 verbunden. Zudem ist in Figur 2 die am Reduktionsmitteltank 1 ausgebildete Reduktionsmittelleitung 10 zu erkennen, durch die die wässrige Reduktionsmittellösung 2 im SCR-Katalysator 3 zugeführt werden kann.

Das Befüllen des Reduktionsmitteltanks 1 findet über den Einfüllstutzen 4 statt. Dabei kann es vorkommen, dass eine Fehlbetankung erfolgt, indem zum Beispiel der Zapfhahn 13 für einen Kraftstoff in den Einfüllstutzen 4 des Reduktionsmitteltanks 1 eingeführt wird. Damit strömt aus dem Zapfhahn 13 eine Flüssigkeit 12 in den Reduktionsmitteltank 1 ein, die nicht als Reduktionsmittellösung 2 zu verwenden ist. Eine derartige Fehlbetankung des Reduktionsmitteltanks 1 muss sicher und zuverlässig erkannt werden, um Schäden am Abgasnachbehandlungssystem 111 zu vermeiden. Dazu sind im Einfüllstutzen 4 eine erste metallische Elektrode 5 und eine zweite metallische Elektrode 6 ausgebildet, die derart im Einfüllstutzen 4 platziert sind, dass sie von der einströmenden Flüssigkeit 12 überströmt werden und dabei in einen direkten Kontakt mit der einströmenden Flüssigkeit 12 geraten.

Bei einer Befüllung des Reduktionsmitteltanks 1 wird der Füllstandssensor 3 eine Veränderung des Füllstandes der Reduktionsmittellösung 2 feststellen. Diese Veränderung des Füllstandes 11 wird vom Füllstandssensor 3 an das Steuergerät 9 gemeldet. Darüber hinaus wird zwischen der ersten metallischen Elektrode 5 und der zweiten metallischen Elektrode 6 ein Messgerät 8 eingesetzt, dass den Strom misst, der über die einströmende Flüssigkeit 12 fließen kann. Zeigt die einströmende Flüssigkeit 12 einen geringen Widerstand und ermöglicht damit einen hohen Stromfluss, so kann daraus geschlossen werden, dass eine wässrige Reduktionsmittellösung eingefüllt wurde, womit keine Fehlbetankung erfolgt ist. Handelt es sich jedoch bei der einströmenden Flüssigkeit 12 zum Beispiel um einen Kraftstoff oder ein Motoröl, so wird über diese Flüssigkeiten nur ein sehr geringer Strom fließen können, da der Widerstand dieser Flüssigkeiten sehr groß ist. Dies wird vom Messgerät 8 erkannt und an das Steuergerät 9 weitergeleitet. Stellt das Steuergerät 9 einen steigenden Füllstand 11 fest und erhält es die Information, dass der Widerstand der einströmenden Flüssigkeit hoch ist, dann kann das Steuergerät eine Fehlbetankung des Reduktionsmitteltanks 1 sicher erkennen und zum Schutz des Abgasnachbehandlungssystems 111 entsprechende Gegenmaßnahmen einleiten.

## Patentansprüche

1. Reduktionsmitteltank (1) zur Aufnahme und Bevorratung einer Reduktionsmittellösung (2) mit einem Einfüllstutzen (4) und einem Füllstandssensor (3) zur Bestimmung des Füllstandes (11) der Reduktionsmittellösung (2) in dem Reduktionsmitteltank (1), **dadurch gekennzeichnet, dass** in dem Einfüllstutzen (4) einen erste Elektrode (5) und eine zweite Elektrode (6) derart angeordnet sind, dass die erste Elektrode (5) und die zweite Elektrode (6) von einer in den Reduktionsmitteltank (1) einströmenden Flüssigkeit (12) überströmt werden, wobei die erste Elektrode (5) und die zweite Elektrode (6) in einen direkten Kontakt mit der einströmenden Flüssigkeit (12) geraten.

2. Reduktionsmitteltank (1) nach Anspruch 1, **dadurch gekennzeichnet, dass** die erste Elektrode (5) als ein erstes metallisches Netz ausgebildet ist.

3. Reduktionsmitteltank (1) nach Anspruch 1 oder 2,
**dadurch gekennzeichnet, dass** die zweite Elektrode (5) als ein zweites metallisches Netz ausgebildet ist.

4. Reduktionsmitteltank (1) nach einem der vorstehenden Ansprüche, **dadurch gekennzeichnet, dass** der Füllstandssensor (3)als Ultraschallfüllstandssensor ausgebildet ist.

## Claims

1. Reducing agent tank (1) for receiving and storing a reducing agent solution (2), having a filler neck (4) and having a fill level sensor (3) for determining the fill level (11) of the reducing agent solution (2) in the reducing agent tank (1), **characterized in that** a first electrode (5) and a second electrode (6) are arranged in the filler neck (4) such that a liquid (12) flowing into the reducing agent tank (1) flows over the first electrode (5) and the second electrode (6), wherein the first electrode (5) and the second electrode (6) come into direct contact with the inflowing liquid (12).

2. Reducing agent tank (1) according to Claim 1, **characterized in that** the first electrode (5) is in the form of a first metallic mesh.

3. Reducing agent tank (1) according to Claim 1 or 2, **characterized in that** the second electrode (5) is in the form of a second metallic mesh.

4. Reducing agent tank (1) according to one of the preceding claims, **characterized in that** the fill level sensor (3) is in the form of an ultrasonic fill level sensor.

## Revendications

1. Réservoir d'agent réducteur (1) pour recevoir et stocker une solution d'agent réducteur (2) comprenant une tubulure de remplissage (4) et un capteur de niveau de remplissage (3) pour déterminer le niveau de remplissage (11) de la solution d'agent réducteur (2) dans le réservoir d'agent réducteur (1), **caractérisé en ce qu'**une première électrode (5) et une deuxième électrode (6) sont disposées dans la tubulure de remplissage (4) de telle sorte que la première électrode (5) et la deuxième électrode (6) soient couvertes par l'écoulement d'un liquide affluant (12) dans le réservoir d'agent réducteur (1), la première électrode (5) et la deuxième électrode (6) entrant en contact direct avec le liquide affluant (12).

2. Réservoir d'agent réducteur (1) selon la revendication 1, **caractérisé en ce que** la première électrode (5) est réalisée sous forme de premier filet métallique.

3. Réservoir d'agent réducteur (1) selon la revendication 1 ou 2, **caractérisé en ce que** la deuxième électrode (5) est réalisée sous forme de deuxième filet métallique.

4. Réservoir d'agent réducteur (1) selon l'une quelconque des revendications précédentes, **caractérisé en ce que** le capteur de niveau de remplissage (3) est réalisé sous forme de capteur de niveau de remplissage à ultrasons.
